# EUROPÄISCHE PATENTANMELDUNG

(11) **EP 2 060 446 A1**
(43) Veröffentlichungstag der Anmeldung: **20.05.2009**
(21) Anmeldenummer: 07291364.3
(22) Anmeldetag: 14.11.2007
(51) Int. Cl.: B60R 16/027, H01R 35/02

(54) **Vorrichtung zur Strom- und/oder Signalübertragung zwischen zwei Endstellen**

(71) Anmelder: Nexans, 75008 Paris (FR)
(72) Erfinder: Schröer, Frank, 92637 Weiden (DE)
(74) Vertreter: Döring, Roger

(57) **Zusammenfassung**

Es wird eine Vorrichtung zur Strom- und/oder Signalübertragung zwischen zwei Endstellen angegeben, die relativ zueinander beweglich sind und zwischen denen eine in Windungen verlaufende, einen Wickelkörper bildende Flachleiter-Bandleitung (10) angeordnet ist, die mindestens zwei parallel und mit Abstand zueinander in eine Umhüllung aus Isoliermaterial eingebettete elektrische Leiter (26) aufweist. Der Wickelkörper der Flachleiter-Bandleitung (10) ist in einer Kassette untergebracht, die aus einem um ihre Achse drehbaren Rotor und einem feststehenden Stator besteht. Zur Verbesserung des Gleitverhaltens der Flachleiter-Bandleitung (10) in der Kassette bei gleichzeitiger Verminderung einer Geräuschentwicklung ist zumindest an einer der Seitenkanten derselben über deren ganze Länge ein die Stirnseite derselben abdeckender Gleitkörper (24) angebracht, der aus einem Isoliermaterial mit sehr guten Gleiteigenschaften besteht.

## Beschreibung

Die Erfindung bezieht sich auf eine Vorrichtung zur Strom- und/oder Signalübertragung zwischen zwei Endstellen, die relativ zueinander beweglich sind und zwischen denen eine in Windungen verlaufende, einen Wickelkörper bildende Flachleiter-Bandleitung angeordnet ist, die mindestens zwei parallel und mit Abstand zueinander in eine Umhüllung aus Isoliermaterial eingebettete elektrische Leiter aufweist, bei welcher der Wickelkörper der Flachleiter-Bandleitung in einer Kassette untergebracht ist, die aus einem um ihre Achse drehbaren Rotor, an dem eine der Endstellen angebracht ist, und einem feststehenden Stator besteht, an dem ebenfalls eine der Endstellen angebracht ist, und bei welcher über der Umhüllung der Flachleiter-Bandleitung zusätzliches Isoliermaterial vorhanden ist, das sehr gute Gleiteigenschaften hat (DE 10 2004 033 024 Al).

Eine derartige Vorrichtung wird beispielsweise für die Übertragung von elektrischem Strom und/oder Signalen zum Auslösen des "Airbag" eines Prallschutzes für Kraftfahrzeuge verwendet. Sie ist dazu im Lenkrad eines Kraftfahrzeugs untergebracht, kann aber auch an einer anderen Stelle in einem Kraftfahrzeug angeordnet sein, an der ebenfalls eine Strom- und/oder Signalübertragung zwischen feststehenden und beweglichen Teilen ohne Schleifkontakte bzw. Schleifringe erfolgen soll.

Beispielsweise durch die EP-A-0 417 350 und die DE-U-295 10 286 sind Vorrichtungen zur kontaktlosen Stromübertragung zwischen zwei Endstellen mittels einer nach Art eines Federhauses zu einem Wickelkörper gewickelten Flachleiter-Bandleitung - im folgenden kurz als "FL-BL" bezeichnet - bekanntgeworden, die in einer aus einem feststehenden Stator und einem drehbaren Rotor bestehenden Kassette angeordnet ist. Bei einer relativen Drehbewegung der beiden durch die FL-BL verbundenen Endstellen, "atmet" die aufgewickelte FL-BL wie die Feder einer Uhr. Die Windungen der gewickelten FL-BL werden in der einen Drehrichtung auf einen kleineren Durchmesser zusammengezogen. Sie gehen in der anderen Drehrichtung wieder auf einen größeren Durchmesser auf. Aus der EP-B-0 735 631 geht eine ähnliche Vorrichtung hervor, bei welcher der Wickelkörper jedoch in zwei Teilwicklungen mit gegenläufigem Wickelsinn aufgeteilt ist, zwischen denen ein ringförmiger Führungskörper angeordnet ist. Die Windungen der FL-BL gleiten in beiden Ausführungsformen der Vorrichtung auf den sie begrenzenden Flächen von Stator und Rotor der Kassette, wenn beispielsweise das Lenkrad eines mit der Vorrichtung ausgerüsteten Fahrzeugs gedreht wird. Störende Geräusche sind bei den beschriebenen Vorrichtungen allein durch die Gleitbewegung der FL-BL, aber auch durch Erschütterungen während der Fahrt des Fahrzeugs oft nicht zu vermeiden.

Um derartige Geräusche zumindest auf ein nicht störendes Maß abzuschwächen, sind bei der Vorrichtung nach der EP-A 0 417 350 die Flächen, an denen die FL-BL entlanggleitet, mit einem textilen Dämmstoff beschichtet. Es ist nicht auszuschließen, daß die Bewegung der FL-BL wegen schwankender Toleranzen und der faserigen Oberfläche der Dämmstoffe durch die beiden Schichten behindert wird.

Diese Gefahr ist bei der Vorrichtung nach der DE-U-295 10 286 weitestgehend ausgeschlossen. Bei dieser Vorrichtung ist eine der beiden Flächen mit einer an der Oberfläche glatten, aus Fasern bestehenden vliesförmigen Schicht versehen, während an der gegenüberliegenden Fläche eine Schicht aus Schaumstoff mit einer geschlossenen planen Oberfläche angebracht ist.

In der Vorrichtung nach der eingangs erwähnten DE 10 2004 033 024 A1 ist in der zugehörigen Kassette eine FL-BL eingesetzt, die vollständig von einer dünnen Schicht aus einem vernetzten Isoliermaterial umgeben ist, das sehr gute Gleiteigenschaften hat. Es soll dadurch die Gleitreibung zwischen der FL-BL und Kunststoffteilen der Kassette herabgesetzt werden. Eine solche FL-BL kann in der Kassette auch ohne zusätzliche Beschichtung von Flächen derselben leicht gleiten, mit entsprechend verringerter Geräuschentwicklung. Der Aufwand für das vernetzte Isoliermaterial und seine Aufbringung auf die FL-BL ist jedoch relativ hoch.

Der Erfindung liegt die Aufgabe zugrunde, die eingangs geschilderte Vorrichtung so zu gestalten, daß die darin eingesetzte FL-BL auch bei vermindertem Aufwand leicht und geräuscharm in einer Kassette gleiten kann.

Diese Aufgabe wird gemäß der Erfindung dadurch gelöst, daß zumindest an einer der Seitenkanten der FL-BL über deren ganze Länge ein die Stirnseite derselben abdeckender Gleitkörper angebracht ist, der aus dem Isoliermaterial mit den sehr guten Gleiteigenschaften besteht.

Bei der in dieser Vorrichtung eingesetzten FL-BL ist zumindest an einer der Seitenkanten ein Gleitkörper so angebracht, daß die dortige Stirnseite, welche insbesondere bei einer in Kaschiertechnik hergestellten FL-BL relativ scharfkantig ist, wirksam abgedeckt ist. Mit Vorteil ist zumindest an der Seitenkante der FL-BL ein Gleitkörper angebracht, die in Gebrauchslage unten liegt und dadurch ständig auf entsprechenden Flächen der Kassette aufliegt. Der Gleitkörper kann sehr einfach auf die FL-BL aufgebracht werden. Dazu braucht die FL-BL beispielsweise nur durch ein Bad hindurchgezogen zu werden, in dem das entsprechende Isoliermaterial - im folgenden kurz "Gleitmaterial" genannt - in entsprechender Konsistenz vorliegt. Das Gleitmaterial könnte allerdings auch durch Extrusion auf die FL-BL aufgebracht werden. Auch der Aufwand für das Gleitmaterial selbst ist gering. Das gilt auch dann, wenn der Gleitkörper, der prinzipiell nur die Stirnseite der FL-BL abdecken soll, zur Verbesserung der Haftung sich als U-förmiger Gleitkörper bis in die Seitenbereiche der FL-BL erstreckt.

Zur weiteren Herabsetzung der Geräuschentwicklung bei einer Bewegung der FBL in einer Kassette kann für den Gleitkörper ein Gleitmaterial verwendet werden, das geräuschdämmende bzw. vibrationshemmende Eigenschaften hat.

Ausführungsbeispiele des Erfindungsgegenstandes sind in den Zeichnungen dargestellt.

### Es zeigen:

Fig. 1 eine Ansicht einer Kassette für eine Vorrichtung nach der Erfindung in schematischer Darstellung.
Fig. 2 eine gegenüber Fig. 1 abgewandelte Ausführungsform der Kassette.

Fig. 3 einen Schnitt durch eine Kassette in grundsätzlicher Ausführung.
Fig. 4 bis 6 unterschiedliche Ansichten einer in der Vorrichtung einsetzbaren FL-BL.

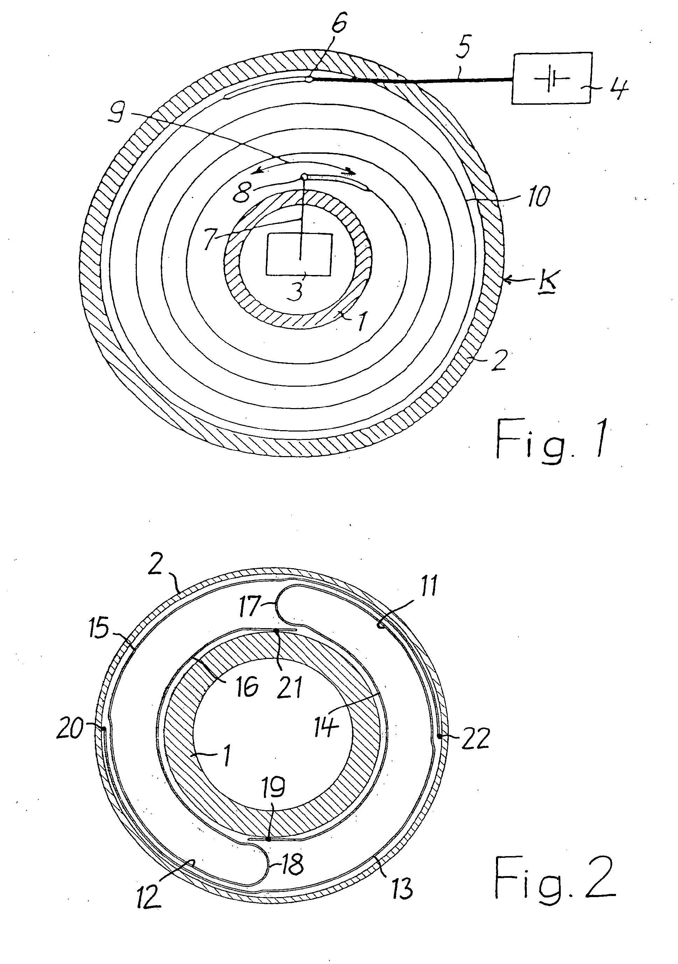

In Fig. 1 sind schematisch zwei beispielsweise kreisförmig ausgebildete Wände 1 und 2 einer aus Kunststoff bestehenden Kassette K dargestellt. Geeignete Kunststoffe sind beispielsweise Polycarbonat, Polyoxymethylen und Polybuthylenterephthalat. Die Wand 1 gehört beispielsweise zu einem um seine Achse drehbaren Rotor der Kassette K, während die Wand 2 dann zu deren feststehendem Stator gehört. Die Zuordnung der Wände 1 und 2 könnte aber auch umgekehrt sein. Die Kassette K ist beispielsweise für den Einbau in das Lenkrad eines Kraftfahrzeugs bestimmt. Zur Stromversorgung einer Elektronik 3, durch deren Signal ein Airbag ausgelöst werden kann, ist die Kassette K an eine Spannungsquelle 4 des Kraftfahrzeugs angeschlossen. Die Spannungsquelle 4 ist über eine elektrische Leitung 5 mit einer als Festpunkt ausgeführten Endstelle 6 der Kassette K verbunden. Die Elektronik 3 ist über eine elektrische Leitung 7 an eine Endstelle 8 der Kassette K angeschlossen, die in Richtung des Doppelpfeiles 9 bewegbar ist. Grundsätzlich könnten auch die Endstelle 8 feststehend und die Endstelle 6 bewegbar ausgeführt sein.

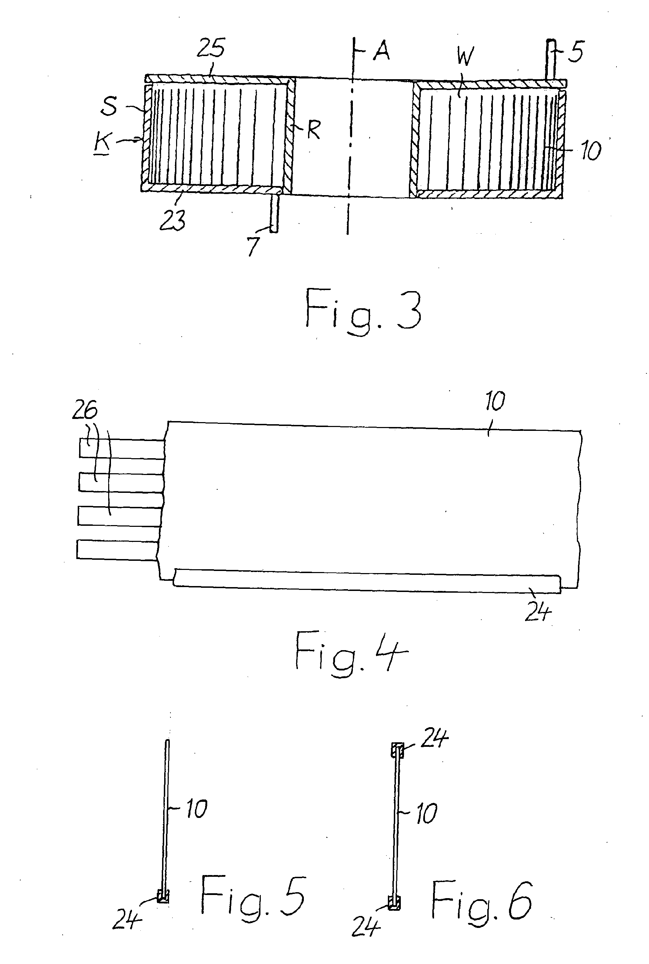

Zwischen den beiden Endstellen 6 und 8 ist innerhalb der Kassette K zwischen Rotor (Wand 1) und Stator (Wand 2) derselben eine FL-BL 10 mit mindestens zwei elektrischen, als Flachleiter ausgebildeten Leitern angebracht. Die FL-BL 10 ist wegen der flachen Leiter besonders dünn und nimmt daher sehr wenig Raum ein. Der Aufbau der FL-BL 10 geht beispielsweise aus den Fig. 4 bis 6 hervor. Die Art ihres Anschlusses bzw. Abschlusses an den Endstellen 6 und 8 ist nicht genauer dargestellt. Sie ist prinzipiell in unterschiedlichen Varianten bekannt und hier nicht von Bedeutung.

Die FL-BL 10 kann gemäß Fig. 1 in der Kassette K zwischen den beiden Endstellen 6 und 8 als Wickelkörper in mehreren Windungen angeordnet sein, also nach Art eines Federhauses von Uhren. Obwohl die Anzahl der Umdrehungen eines Lenkrades auf etwa sechs Umdrehungen begrenzt ist, sollen mehr als sechs Windungen für die FL-BL 10 vorgesehen sein. Die Drehbewegung der am Rotor der Kassette K angebrachten Endstelle 8 macht sich dann für eine einzelne Windung der FL-BL 10 nicht wesentlich bemerkbar. Es wird lediglich der Durchmesser des aus allen Windungen der FL-BL 10 bestehenden Wickelkörpers verkleinert bzw. vergrößert.

In der Kassette K können gemäß Fig. 2 beispielsweise auch zwei FL-BLen 11 und 12 untergebracht sein, die jede in zwei Windungsbereichen 13 und 14 einerseits sowie 15 und 16 andererseits mit entgegengesetzter Richtung verlaufen und jeweils eine etwa U-förmige Umkehrstelle 17 bzw. 18 aufweisen. Die beiden FL-BLen 11 und 12 sind mit ihren Enden jeweils am Rotor (Wand 1) an den Stellen 19 und 20 und am Stator (Wand 2) an den Stellen 21 und 22 festgelegt. Bei einer Drehung des Rotors folgen die Umkehrstellen 17 und 18 der Drehbewegung in Umfangsrichtung der Kassette K, mit entsprechender Verkürzung bzw. Verlängerung der Windungsbereiche 13 bis 16. In einer Kassette K soll mindestens eine derartige FL-BL mit zwei Windungsbereichen und einer Umkehrstelle vorhanden sein. Es können aber auch mehr als zwei FL-BLen sein, und zwar vorzugsweise vier mit vier in Umfangsrichtung versetzten Umkehrstellen. In einer solchen Kassette K kann auch ein etwa ringförmiger Führungskörper zwischen den Windungsbereichen angebracht sein, der ein Zusammenfallen der Windungen verhindert.

Die FL-BL 10 ist entsprechend der prinzipiellen Darstellung in Fig. 3 in einem ringförmigen Wickelraum W der Kassette K angeordnet. Der Wickelraum W wird einerseits von dem der Wand 1 entsprechenden Rotor R und andererseits von dem der Wand 2 entsprechenden Stator S begrenzt. Der Rotor R ist um die Achse A drehbar. Die zu Fig. 1 erläuterten Leitungen 5 und 7 sind in Fig. 3 mit angedeutet. Der in Fig. 3 nur sehr schematisch dargestellte Aufbau einer Kassette K mit FL-BL 10 gilt auch für eine Kassette K nach Fig. 2 mit zwei FL-BLen 11 und 12. In den folgenden Ausführungen wird der Einfachheit halber nur die FL-BL 10 berücksichtigt, stellvertretend auch für die FL-BLen 11 und 12.

Die FL-BL 10 liegt in Montageposition auf der Innenfläche einer horizontal verlaufenden Wandung 23 des Stators S auf. Bei einer Drehbewegung des Rotors R gleiten ihre Windungen auf dieser Innenfläche hin und her.

Um die Bewegung der FL-BL 10 auf der Innenfläche der Wandung 23 möglichst leichtgängig und geräuscharm zu machen, ist entsprechend der Darstellung in den Fig. 4 bis 6 an der entsprechenden Seitenkante der FL-BL 10 über ihre ganze Länge ein U-förmiger Gleitkörper 24 angebracht, der insbesondere deren schmale bzw. sogar scharfkantige Stirnseite abdeckt bzw. abdecken soll. Er könnte daher grundsätzlich auch nur an der Stirnseite vorhanden sein, wenn eine ausreichend feste Haftung an der FL-BL 10 erreicht werden kann. Bei der dargestellten Ausführungsform ist der Gleitkörper 24 an den beiden Seitenflächen der FL-BL 10 geringfügig hochgezogen. Seine Wandstärke liegt im Stirnbereich mit Vorteil zwischen 0,02 mm und 1,00 mm sowie in den Seitenbereichen zwischen 0,02 mm und 0,2 mm. Der Gleitkörper 24 besteht aus einem Material mit sehr guten Gleiteigenschaften, so daß die Windungen der FL-BL 10 leichtgängig und geräuscharm auf der Innenfläche der Wandung 23 entlanggleiten. Gegebenenfalls kann vor der Erzeugung des Gleitkörpers 24 noch ein Haftvermittler auf die FL-BL 10 aufgetragen werden.

Das für den Gleitkörper 24 verwendete Material kann zusätzlich geräuschdämmende bzw. vibrationshemmende Eigenschaften haben, wodurch die Gefahr einer Geräuschentwicklung in der Kassette K weiter vermindert werden kann. Geeignete Materialien sind beispielsweise Polyurethan, auch in geschäumter Ausführung, und Silikon.

Wenn der Gleitkörper 24 nur an einer Seitenkante der FL-BL 10 angebracht ist, die entsprechend der geschilderten Ausführungsform auf der Innenfläche der Wandung 23 aufliegt, dann wird zweckmäßig die Innenfläche der der Wandung 23 gegenüberliegenden, zum Rotor R gehörenden Wandung 25 mit einer weichen Beschichtung versehen. Eine solche Beschichtung verhindert die Entstehung von Geräuschen, wenn die FL-BL 10 bei größeren Erschütterungen gegen diese Innenfläche schlägt. Dieser Aufbau von Kassette K und FL-BL 10 gilt in umgekehrter Version auch dann, wenn der Gleitkörper 24 an der in Gebrauchslage oben liegenden Seitenkante der FL-BL 10 angebracht ist.

In bevorzugter Ausführungsform hat die FL-BL 10 entsprechend der Darstellung in Fig. 6 an beiden Seitenkanten einen Gleitkörper 24, der wieder U-förmig dargestellt ist.

Der Gleitkörper 24 bzw. die Gleitkörper 24 kann bzw. können beispielsweise wie folgt auf die FL-BL 10 aufgebracht werden:
Die FL-BL 10 wird zunächst in üblicher Technik hergestellt, indem eine gewünschte Anzahl von flachen elektrischen Leitern 26 (Fig. 4), die vorzugsweise aus Kupfer bestehen, parallel und mit Abstand zueinander verlaufend in Isoliermaterial eingebracht wird. Das Isoliermaterial kann um die Leiter 26 herum extrudiert werden. In bevorzugter Ausführungsform werden die Leiter 26 aber zwischen zwei Folien aus Isoliermaterial einkaschiert. Bei dieser Ausführungsform der FL-BL 10 ergeben sich sehr schmale Seitenkanten mit entsprechend dünnen Stirnseiten, die auch scharfkantig ausfallen können.
Die fertige FL-BL 10 kann im gleichen oder in einem separaten Arbeitsgang im kontinuierlichen Durchlauf durch ein Bad gezogen werden, in welchem das Gleitmaterial in einer Konsistenz vorliegt, die zum Beschichten der FL-BL 10 und zum Anhaften an derselben ausreicht. Wenn an beiden Seitenkanten der FL-BL 10 ein Gleitkörper 24 angeformt werden soll, dann muß die FL-BL 10 in einem weiteren Arbeitsgang noch einmal durch das Bad mit dem Gleitmaterial hindurchgezogen werden.
Der bzw. die Gleitkörper 24 kann bzw. können auch durch Extrusion erzeugt werden. Dazu kann die FL-BL 10 gleich nach ihrer Herstellung oder auch später durch einen Extruder geführt werden, in dem nur ein Gleitkörper 24 an einer Seitenkante oder zwei Gleitkörper 24 an beiden Seitenkanten der FL-BL 10 erzeugt werden. Der bzw. die Gleitkörper 24 kann bzw. können aber auch gleich bei der Herstellung der FL-BL 10 in bekannter Technik durch Mehrschicht-Extrusion erzeugt werden.

## Patentansprüche

1. Vorrichtung zur Strom- und/oder Signalübertragung zwischen zwei Endstellen, die relativ zueinander beweglich sind und zwischen denen eine in Windungen verlaufende, einen Wickelkörper bildende Flachleiter-Bandleitung angeordnet ist, die mindestens zwei parallel und mit Abstand zueinander in eine Umhüllung aus Isoliermaterial eingebettete elektrische Leiter aufweist, bei welcher der Wickelkörper der Flachleiter-Bandleitung in einer Kassette untergebracht ist, die aus einem um ihre Achse drehbaren Rotor, an dem eine der Endstellen angebracht ist, und einem feststehenden Stator besteht, an dem ebenfalls eine der Endstellen angebracht ist, und bei welcher über der Umhüllung der Flachleiter-Bandleitung zusätzliches Isoliermaterial vorhanden ist, das sehr gute Gleiteigenschaften hat, **dadurch gekennzeichnet, daß** zumindest an einer der Seitenkanten der Flachleiter-Bandleitung (10,11,12) über deren ganze Länge ein die Stirnseite derselben abdeckender Gleitkörper (24) angebracht ist, der aus dem Isoliermaterial mit den sehr guten Gleiteigenschaften besteht.

2. Vorrichtung nach Anspruch 1, **dadurch gekennzeichnet, daß** an beiden Seitenkanten der Flachleiter-Bandleitung (10,11,12) ein Gleitkörper (24) angebracht ist.

3. Vorrichtung nach Anspruch 1 oder 2, **dadurch gekennzeichnet, daß** der Gleitkörper (24) U-förmig gestaltet ist und sich bis über die Seitenflächen der Flachleiter-Bandleitung (10,11,12) erstreckt.

4. Vorrichtung nach einem der Ansprüche 1 bis 3, **dadurch gekennzeichnet, daß** für den Gleitkörper (24) ein Isoliermaterial eingesetzt ist, das gleichzeitig geräuschdämmende bzw. vibrationshemmende Eigenschaften hat.
